# FASCICULE DE BREVET EUROPEEN

(11) **EP 1 933 125 B1**
(45) Date de publication et mention de la délivrance du brevet: **17.02.2010**
(21) Numéro de dépôt: 07291479.9
(22) Date de dépôt: 10.12.2007
(51) Int. Cl.: G01N 3/08, G01N 3/40

(54) **Méthode et dispositif de mesures des propriétés élastiques, plastiques et de rupture**
Verfahren und Vorrictung zur Messung von elastischen und plastichen Eigenschaften sowie von Brucheigenschaften
Method and device for measuring the elastical, plastical and rupture properties

(30) Priorité: 15.12.2006 FR 0610994
(43) Date de publication de la demande: 18.06.2008
(73) Titulaire: IFP, 92852 Rueil-Malmaison Cédex (FR)
(72) Inventeur: Vincke, Olivier, 95100 Sannois (FR); Longuemare, Pascal, 78100 St. Germain (FR); Failla, Hervé, 92500 Rueil Malmaison (FR)

(56) Documents cités:
- US-A- 5 207 104
- US-A- 5 947 104
- DATABASE WPI Week 199513 Derwent Publications Ltd., London, GB; AN 1995-097348 XP002447697 & RU 2 016 394 C1 (MINE GEOMECH SURVEY RES INST) 15 juillet 1994 (1994-07-15)
- DATABASE WPI Week 198048 Derwent Publications Ltd., London, GB; AN 1980-L5399C XP002447698 & SU 728 035 A (KAZA POLY) 15 avril 1980 (1980-04-15)

## Description

La présente invention se rapporte au domaine des tests mécaniques sur des matériaux et plus particulièrement sur des roches ou géomatériaux sans pour autant se limiter à ces seuls matériaux. La présente invention porte sur un dispositif d'essai permettant une mesure simple et rapide des propriétés mécaniques élastiques, plastiques et de rupture d'un échantillon cylindrique sous différents niveaux de chargement mécanique.

Le dispositif d'essai selon l'invention est un système mécanique simple permettant d'appliquer une contrainte axiale de compression sur un échantillon placé dans une cellule équipée d'un piston, le piston comportant des moyens de poinçonnement intégrés au corps du piston et commandés indépendamment de la compression du piston.

Un effort de compression axial selon l'axe du piston est donc appliqué sur l'échantillon qui subit une déformation axiale selon ledit axe du piston, induisant un effort de compression radial et donc une déformation radiale, la déformation radiale étant limitée par les parois de la cellule qui l'entoure.

Ce type d'essai et de chargement sont dits oedométriques. Il faut entendre par oedométrique que la cellule subit une déformation radiale négligeable par rapport à la déformation axiale selon l'axe du piston.

L'invention concerne également une méthode de mesure des propriétés mécaniques d'un échantillon au cours d'un seul essai sur lequel on réalise successivement un test de comportement élastique, plastique et un test de comportement à la rupture par la combinaison d'un test de déformation uniaxiale et d'un test de poinçonnage.

Le dispositif d'essai et la méthode de mesure peuvent être utilisés et appliqués en présence d'un fluide interstitiel en condition drainée ou non drainée et en température.

Il existe des systèmes de mesure des propriétés des (géo)matériaux qui permettent d'appliquer des sollicitations mécaniques triaxiales en présence d'une pression interstitielle et en température mais ce sont des dispositifs coûteux et difficiles à mettre en oeuvre.

### Description des modes de réalisation

L'invention porte sur un dispositif d'essai (1) pour mesurer les propriétés mécaniques élastiques, plastique et de rupture d'un échantillon d'un matériau, constitué d'une cellule équipée d'un piston fournissant une compression sur l'échantillon placé dans la cellule, dans lequel le piston comporte des moyens de poinçonnement intégrés au corps du piston et commandés indépendamment de la compression du piston.

L'échantillon et la cellule peuvent être cylindriques et de même diamètre.

Les moyens de poinçonnement peuvent comprendre un ou plusieurs poinçon intégré au corps du piston et commandé hydrauliquement.

Les poinçons peuvent être commandés indépendamment les uns des autres.

Les moyens de poinçonnement peuvent être constitués de trois poinçons répartis sur la section du piston.

La cellule cylindrique peut comporter des parois dimensionnées pour limiter la déformation radiale de l'échantillon.

Le dispositif peut comporter un système de mesure de la déformation radiale de la cellule.

Le dispositif peut comporter un système de mesure acoustique et/ou accélérométrique.

Le dispositif peut comporter un système de chauffage et de contrôle de température.

L'invention porte également sur une méthode de mesure d'un comportement mécanique d'un échantillon mettant en oeuvre le dispositif selon l'invention dans lequel on effectue simultanément, sur un même échantillon, un test de comportement élastique, plastique et un test de comportement à la rupture.

Il est déjà connu de l'homme du métier un dispositif d'essai pour mesurer les propriétés mécaniques élastiques, d'un échantillon d'un matériau comportant une cellule équipée d'un piston fournissant une compression sur l'échantillon placé dans la cellule, mais le piston ne comporte pas de moyens de poinçonnement intégrés au corps dudit piston et commandés indépendamment de la compression dudit piston. (Derwent Publication Ltd, London, GB; AN 1995-097348 XP002447697 & RU 2 016 394 (Mine Geomech survey Res Inst)

Il est également connu de l'homme du métier un autre dispositif d'essai qui peut être utilisé pour tester les rochers selon un axe tri dimentionnel. (Derwent Publication Ltd. London, GB; 1980 L 5399 XP002447698 & SU 2 728 035 (KAZA POLY)

Le brevet US 5 947 104 décrit également un dispositif de test d'échantillon rocheux comprenant un support et un membre permettant le clivage dudit échantillon.

Le brevet US 5 207 104 décrit un outil de test comprenant deux pistons diamétralement opposés et situé sur la face latérale dudit outil.

Le test de comportement élastique, plastique peut être réalisé par un chargement uni axial de l'échantillon à l'aide d'un piston et le test de comportement à la rupture peut être réalisé par des moyens de poinçonnement intégrés au piston.

D'après la méthode selon l'invention, on peut effectuer plusieurs poinçonnements à des niveaux de chargement différents.

On peut effectuer la mesure sur un échantillon choisi parmi des matériaux poreux, des matériaux non poreux, des matériaux poreux consolidés, des matériaux poreux non consolidés et des matériaux constitués d'un assemblage de fragments de matériaux.

On peut également effectuer la mesure en présence d'une pression de fluide interstitiel dans ledit échantillon. En particulier lorsqu'il est constitué de fragments de matériaux poreux tels que des débris de roche forée.

La présente invention permet ainsi une mesure simple et rapide des propriétés mécaniques élastiques, plastique et de rupture d'échantillons choisi parmi les matériaux poreux, les matériaux non poreux, les matériaux poreux consolidés, les matériaux poreux non consolidés et les matériaux constitués d'un assemblage de fragments de matériaux tels que des débris de forage ou des morceaux de carotte.

### Description sommaire des figures

La présente invention sera mieux comprise et ses avantages apparaîtront plus clairement à la lecture de la description qui suit d'un mode de réalisation, nullement limitatif, illustré par les figures ci-après annexées, parmi lesquelles :
- la figure 1A illustre le principe du dispositif selon l'invention,
- la figure 1B illustre une vue en coupe selon l'axe du dispositif selon l'invention représenté sur la figure 1A,
- la figure 1C illustre une vue en coupe selon l'axe AA du dispositif selon l'invention représenté sur la figure 1B,
- la figure 2 illustre les chemins de chargement oedométrique et dé poinçonnement sous confinement obtenus avec la méthode de mesure utilisant le dispositif selon l'invention.

### Description des figures

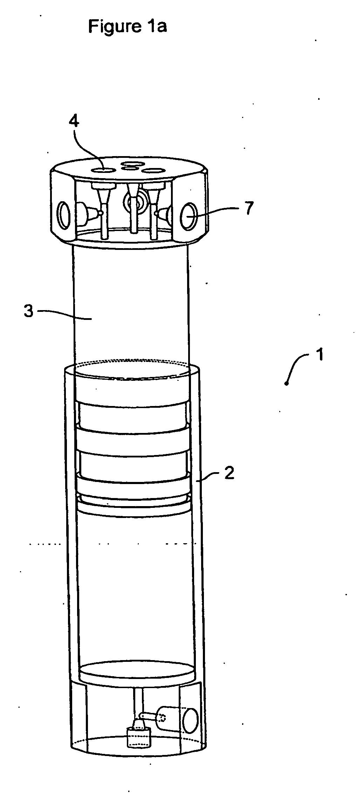

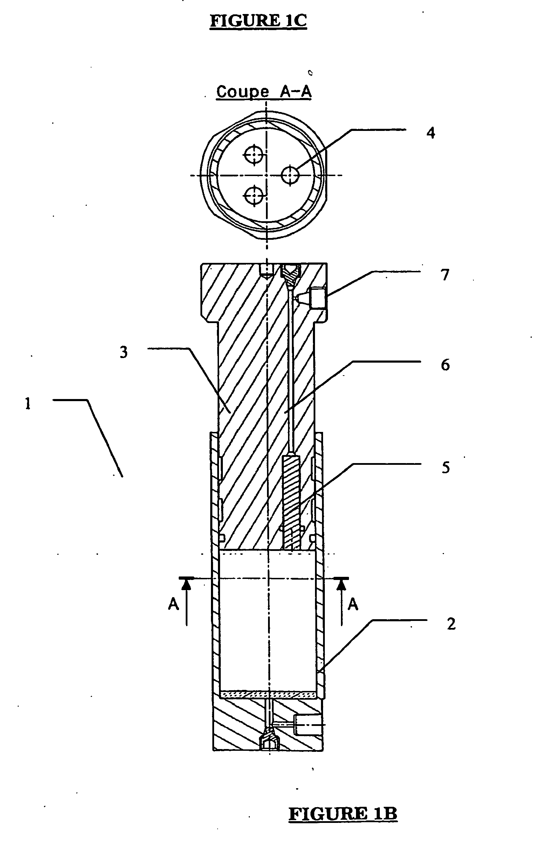

La figure 1A illustre le principe du dispositif d'essai (1) selon l'invention.
La figure 1B illustre une vue en coupe selon l'axe du dispositif d'essai (1) selon l'invention.
Le dispositif d'essai (1) est constitué d'une cellule cylindrique (2) équipée d'un piston (3) soumis à un système de compression axiale selon l'axe du piston (non représenté sur la figure), l'échantillon cylindrique (non représenté sur la figure) étant placé à l'intérieur de la cellule cylindrique (2) de même diamètre.
Un effort de compression externe est appliqué axialement sur le piston (3) par un système de compression axiale selon l'axe du piston, le système de compression axiale pouvant être une presse, un système hydraulique ou tout autre système équivalent.

Sous l'effet de l'effort de compression externe appliqué axialement selon l'axe du piston (3) sur ledit piston (3), l'échantillon cylindrique se déforme axialement selon l'axe du piston (3), cette déformation axiale induisant une déformation radiale dudit échantillon, cette déformation radiale étant limitée par la paroi de la cellule cylindrique (2) qui le contient.

L'état de contrainte de l'échantillon cylindrique est donc de nature bi-axiale, c'est-à-dire, l'échantillon cylindrique subit à la fois une contrainte de compression axiale selon l'axe du piston (3) et une contrainte de compression radiale.
L'état de déformation de l'échantillon cylindrique est par contre uni-axial du fait de la limitation de la déformation radiale de l'échantillon cylindrique par la paroi de la cellule cylindrique qui le contient.

Par ailleurs, l'épaisseur de la paroi de la cellule cylindrique (2) est définie de manière à résister aux efforts appliqués et à obtenir une déformation radiale faible, et donc négligeable devant la déformation verticale.

Le piston (3) du dispositif d'essai (1) selon l'invention comporte également sur sa surface en contact avec l'échantillon cylindrique des moyens de poinçonnement constitués d'un ou plusieurs poinçons (4) intégrés au corps du piston (3), et commandés indépendamment de la compression du piston (3), les poinçons (4) étant répartis sur la section du piston (3).

Les poinçons (4) sont formés de tiges cylindriques (5) activées de préférence hydrauliquement par les conduits (6), les conduits étant alimentés en pression hydraulique par une pompe hydraulique (non représentée sur la figure) reliée au dispositif selon l'invention par l'orifice (7).

Les poinçons (4) peuvent être commandés indépendamment de la compression du piston (3) et indépendamment les uns des autres.

Pour un niveau de chargement donné exercé par le piston (3), les poinçons (4) permettent d'exercer une sollicitation triaxiale selon l'axe du piston (3) locale additionnelle. Cette sollicitation additionnelle constitue un essai de poinçonnement sous confinement. Elle s'effectue selon un trajet de chargement différent du chemin de déformation uniaxiale et permet d'indenter l'échantillon pour mesurer ses propriétés à la rupture.

Ainsi, grâce à la présence de plusieurs poinçons pouvant être commandés indépendamment de la compression du piston (3) et indépendamment les uns des autres, ce dispositif permet de réaliser la mesure des propriétés de rupture à différents niveaux de chargement de confinement exercés par le piston (3).

Ainsi, la combinaison des chargements consécutifs exercés à la fois par le piston (3) et les poinçons (4) permet une détermination des propriétés élastiques, plastiques et de rupture à différents niveaux de chargement.

Par ailleurs, lors de ce test, il faut veiller à compenser l'effort axial selon l'axe du piston (3) appliqué par le piston (3). Cette compensation doit être asservie pour maintenir un confinement constant sur l'échantillon.

Dans le cas où le système de compression axiale selon l'axe du piston (3) est une presse, on intercale entre le piston (3) et le bâti de la presse un système rotulant (non représenté sur la figure 1B) permettant de compenser un éventuel désalignement introduit dans le dispositif du fait du montage de la presse.

Il est possible de mesurer l'effort de compression axial externe selon l'axe du piston (3) appliqué sur le piston (3) par la mise en place d'un système de mesure de l'effort de compression axial constitué par exemple par un capteur du type jauges de contrainte placé selon les règles de l'art.

Le dispositif d'essai (1) selon l'invention peut avantageusement comporter un système de mesure du déplacement du piston et de la déformation axiale selon l'axe du piston (3) de l'échantillon cylindrique situé dans la cellule cylindrique.

Il est également possible de mesurer la contrainte radiale dans l'échantillon (2) par la mise en place d'un système de mesure placé sur la surface extérieure de la cellule cylindrique (2) permettant de mesurer la déformation radiale de la cellule et d'en déduire la contrainte de compression exercée sur la paroi interne de ladite cellule cylindrique (2) qui correspond à la contrainte de compression radiale subie par l'échantillon cylindrique.

Des capteurs acoustiques peuvent également avantageusement être couplés au niveau du piston et de la base de la cellule pour réaliser des mesures de propriétés élastiques dynamiques (V_{P} et V_{S}). Des accéléromètres peuvent également être placés sur la cellule pour enregistrer l'activité acoustique induite par la rupture de l'échantillon lors du test de comportement à la rupture, c'est-à-dire du test de poinçonnement.

Le dispositif d'essai selon l'invention peut avantageusement être mis en présence d'une pression de fluide interstitiel dans l'espace poreux dans le cas d'essai sur des matériaux poreux.

Le dispositif d'essai selon l'invention peut également avantageusement être mis en température.

Le dispositif d'essai et la méthode de mesure peuvent être utilisés et appliqués en présence d'un fluide interstitiel en condition drainée ou non drainée et en température.

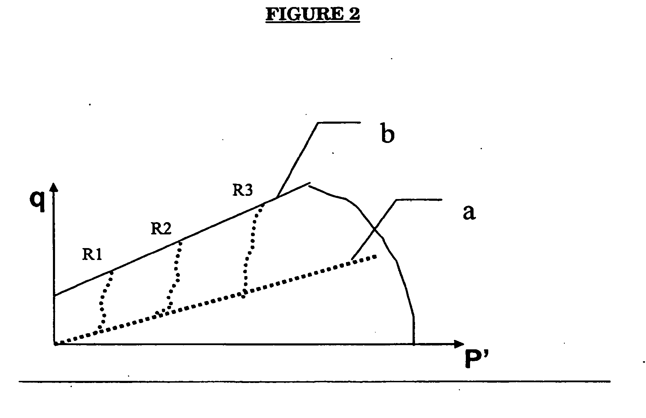

La figure 2 illustre les mesures obtenues en mettant en oeuvre la méthode selon l'invention et plus particulièrement, les chemins de chargement oedométrique et de poinçonnement sous confinement obtenus avec la méthode de mesure utilisant le dispositif selon l'invention.

En ordonnée, on porte la contrainte déviatorique (c'est à dire la différence entre la contrainte verticale et la contrainte radiale, dans le cas d'un chargement bi axial) et en abscisse la contrainte moyenne effective (c'est à dire la moyenne des contraintes diminuées de la valeur de la pression interstitielle dans le cas d'un chargement bi axial).

Le chemin de chargement oedométrique, dit comportement oedométrique, est représenté sur ce diagramme par la courbe en pointillé référencée (a). Les points de rupture R1, R2 et R3 obtenus par l'enfoncement des poinçons sont aussi portés sur ce diagramme et forment la droite référencée (b).

Les caractéristiques mécaniques déterminées à l'aide du dispositif d'essai peuvent avantageusement être utilisées pour effectuer une modélisation (géo)mécanique, par exemple de la stabilité des parois d'un puits en cours de forage, de couplage géomécanique avec un réservoir, de tenue des roches couvertures,...

Ce dispositif peut être appliqué à la connaissance des propriétés géomécaniques le long du puits, en cours de forage, soit à partir de carotte de roche ou de débris de forage.

## Revendications

1. Dispositif d'essai (1) pour mesurer les propriétés mécaniques élastiques, plastiques et de rupture d'un échantillon d'un matériau, comportant une cellule (2) equipée d'un piston (3) fournissant une compression sur l'échantillon placé dans la cellule (2) **caractérisé en ce que** le corps du piston (3) comporte des moyens de poinçonnement (4) intégrés et commandés indépendamment de la compression du piston (3).

2. Dispositif d'essai (1) selon la revendication 1 **caractérisé en ce que** l'échantillon et la cellule (2) sont cylindriques et de même diamètre.

3. Dispositif d'essai (1) selon l'une des revendications 1 ou 2 **caractérisé en ce que** les moyens de poinçonnement (4) comprennent un ou plusieurs poinçons (4) intégrés au corps du piston (3) et commandé hydrauliquement.

4. Dispositif d'essai (1) selon la revendication 3 **caractérisé en ce que** les moyens de poinçonnement (4) comprennent un ou plusieurs poinçons (4) commandés indépendamment les uns des autres.

5. Dispositif d'essai (1) selon la revendication 4 **caractérisé en ce que** les moyens de poinçonnement (4) sont constitués de trois poinçons (4) répartis sur la section du piston (3).

6. Dispositif d'essai (1) selon l'une des revendications précédentes **caractérisé en ce que** la cellule (2) comporte des parois dimensionnées pour limiter la déformation radiale de l'échantillon.

7. Dispositif d'essai (1) selon l'une des revendications 1 à 6 **caractérisé en ce qu'**il comporte un système de mesure de la déformation radiale de la cellule (2).

8. Dispositif d'essai (1) selon l'une des revendications 1 à 6 **caractérisé en ce qu'**il comporte un système de mesure acoustique et/ou accélérométrique.

9. Dispositif d'essai (1) selon l'une des revendications 1 à 8 **caractérisé en ce qu'**il comporte un système de chauffage et de contrôle de température.

10. Méthode de mesure du comportement mécanique d'un échantillon mettant en oeuvre le dispositif selon l'une des revendications 1 à 9 **caractérisée en ce que** on effectue sur un même échantillon, un test de comportement élastique, plastique et un test de comportement à la rupture.

11. Méthode de mesure selon la revendication 10 **caractérisée en ce que** le test de comportement élastique, plastique est réalisé par un chargement uniaxial sur l'échantillon à l'aide d'un piston (3) et le test de comportement à la rupture est réalisé par des moyens de poinçonnement (4) intégrés au piston (3).

12. Méthode de mesure selon l'une des revendications 10 à 11 **caractérisée en ce que** l'on effectue des poinçonnements à des niveaux de chargement différents.

13. Méthode de mesure selon l'une des revendications 10 à 12 **caractérisée en ce que** ledit échantillon est choisi parmi les matériaux suivants : poreux, non poreux, poreux consolidés, poreux non consolidés, et un assemblage de fragments de matériaux.

14. Méthode de mesure selon la revendication 13 **caractérisée en ce que** l'on effectue la mesure en présence d'une pression de fluide interstitiel dans ledit échantillon.

## Claims

1. A testing device (1) for measuring the mechanical elastic, plastic and rupture properties of a sample of a material, comprising a cell (2) equipped with a piston (3) providing compression on the sample arranged in cell (2), **characterized in that** the body of piston (3) comprises integrated punch means (4) controlled independently from the compression of piston (3).

2. A testing device (1) as claimed in claim 1, **characterized in that** the sample and cell (2) are cylindrical and of same diameter.

3. A testing device (1) as claimed in any one of claims 1 or 2, **characterized in that** punch means (4) comprise one or more punches integrated in the body of piston (3) and controlled hydraulically.

4. A testing device (1) as claimed in claim 3, **characterized in that** punch means (4) comprise one or more punches (4) controlled independently from one another.

5. A testing device (1) as claimed in claim 4, **characterized in that** punch means (4) consist of three punches (4) distributed over the section of piston (3).

6. A testing device (1) as claimed in any one of the previous claims, **characterized in that** cell (2) comprises walls dimensioned so as to limit radial deformation of the sample.

7. A testing device (1) as claimed in any one of claims 1 to 6, **characterized in that** it comprises a system for measuring the radial deformation of cell (2).

8. A testing device (1) as claimed in any one of claims 1 to 6, **characterized in that** it comprises an acoustic and/or accelerometric measurement system.

9. A testing device (1) as claimed in any one of claims 1 to 8, **characterized in that** it comprises a heating and temperature control system.

10. A method of measuring the mechanical behaviour of a sample using the device as claimed in any one of claims 1 to 9, **characterized in that** an elastic and plastic behaviour test and a rupture behaviour test are carried out on the same sample.

11. A measuring method as claimed in claim 10, **characterized in that** the elastic and plastic behaviour test is carried out through uniaxial load on the sample by means of a piston (3) and the rupture behaviour test is carried out using punch means (4) integrated in piston (3).

12. A measuring method as claimed in any one of claims 10 and 11, **characterized in that** punching is carried out at different load levels.

13. A measuring method as claimed in any one of claims 10 to 12, **characterized in that** said sample is selected from among the following materials: porous, non-porous, consolidated porous, non-consolidated porous, and an assembly of material fragments.

14. A measuring method as claimed in claim 13, **characterized in that** measurement is carried out in the presence of an interstitial fluid pressure in said sample.

## Patentansprüche

1. Versuchsvorrichtung (1) zum Messen von elastischen und plastischen Eigenschaften sowie von Brucheigenschaften einer Materialprobe, die eine Zelle (2) umfasst, die mit einem Kolben (3) ausgestattet ist, der eine Kompression auf die Probe bereitstellt, die in der Zelle (2) angeordnet ist, **dadurch gekennzeichnet, dass** der Kolbenkörper (3) Mittel zum Stanzen (4) umfasst, die integriert sind und unabhängig von der Kompression des Kolbens (3) gesteuert werden.

2. Versuchsvorrichtung (1) nach Anspruch 1, **dadurch gekennzeichnet, dass** die Probe und die Zelle (2) zylinderförmig sind und den gleichen Durchmesser aufweisen.

3. Versuchsvorrichtung (1) nach einem der Ansprüche 1 oder 2, **dadurch gekennzeichnet, dass** die Mittel zum Stanzen (4) ein oder mehrere Stanzstempel (4) umfassen, die im Kolbenkörper (3) integriert sind und hydraulisch gesteuert werden.

4. Versuchsvorrichtung (1) nach Anspruch 3, **dadurch gekennzeichnet, dass** die Mittel zum Stanzen (4) ein oder mehrere Stanzstempel (4) umfassen, die unabhängig voneinander gesteuert werden.

5. Versuchsvorrichtung (1) nach Anspruch 4, **dadurch gekennzeichnet, dass** die Mittel zum Stanzen (4) aus drei Stanzstempeln (4) bestehen, die auf dem Kolbenquerschnitt (3) verteilt sind.

6. Versuchsvorrichtung (1) nach einem der vorhergehenden Ansprüche, **dadurch gekennzeichnet, dass** die Zelle (2) Wände umfasst, die dimensioniert sind, um die radiale Deformation der Probe zu begrenzen.

7. Versuchsvorrichtung (1) nach einem der Ansprüche 1 bis 6, **dadurch gekennzeichnet, dass** sie ein System zum Messen der radialen Deformation der Zelle (2) umfasst.

8. Versuchsvorrichtung (1) nach einem der Ansprüche 1 bis 6, **dadurch gekennzeichnet, dass** sie ein akustisches und/oder akzelerometrisches System zum Messen umfasst.

9. Versuchsvorrichtung (1) nach einem der Ansprüche 1 bis 8, **dadurch gekennzeichnet, dass** sie ein System zum Erwärmen und zur Kontrolle der Temperatur umfasst.

10. Verfahren zum Messen des mechanischen Verhaltens einer Probe, bei dem eine Vorrichtung nach einem der Ansprüche 1 bis 9 eingesetzt wird, **dadurch gekennzeichnet, dass** an der gleichen Probe ein Test des elastischen und plastischen Verhaltens sowie ein Test des Bruchverhaltens durchgeführt wird.

11. Verfahren zum Messen nach Anspruch 10, **dadurch gekennzeichnet, dass** der Test des elastischen und plastischen Verhaltens durch eine uniaxiale Belastung der Probe mit Hilfe eines Kolbens (3) ausgeführt wird, und dass der Test des Bruchverhaltens durch die Mittel zum Stanzen (4) ausgeführt wird, die in den Kolben (3) integriert sind.

12. Verfahren zum Messen nach einem der Ansprüche 10 bis 11, **dadurch gekennzeichnet, dass** Stanzungen mit verschiedenen Beiastungsgraden durchgeführt werden.

13. Verfahren zum Messen nach einem der Ansprüche 10 bis 12, **dadurch gekennzeichnet, dass** die Probe aus den folgenden Materialien ausgewählt ist: porösen, nicht porösen, verfestigten porösen, nicht verfestigten porösen Materialien, und einem Gemisch aus Materiatfragmenten.

14. Verfahren zum Messen nach Anspruch 13, **dadurch gekennzeichnet, dass** das Messen in Gegenwart eines interstitlellen Flüssigkeitsdruck in der Probe durchgeführt wird.
